# FASCICULE DE BREVET EUROPEEN

(11) **EP 1 638 788 B1**
(45) Date de publication et mention de la délivrance du brevet: **21.02.2018**
(21) Numéro de dépôt: 04739822.7
(22) Date de dépôt: 11.06.2004
(51) Int. Cl.: B60C 23/04

(54) **ARRANGEMENT ET MÉTHODE POUR LA DÉTECTION DES RÉVOLUTIONS D'UN ENSEMBLE PNEUMATIQUE ET ROUE**
ANORDNUNG UND VERFAHREN ZUR FESTSTELLUNG DER UMDREHUNGEN EINER RAD-REIFEN-EINHEIT
ARRANGEMENT AND METHOD FOR DETECTING THE REVOLUTIONS OF A WHEEL AND TIRE SET

(30) Priorité: 16.06.2003 FR 0307234
(43) Date de publication de la demande: 29.03.2006
(73) Titulaire: Compagnie Générale des Etablissements Michelin, 63000 Clermont-Ferrand (FR)
(72) Inventeur: BERANGER, Marc, F-38410 Saint Martin d'Uriage (FR); JEANDEY, Christian, F-38120 Saint Egreve (FR)
(74) Mandataire: Dequire, Philippe Jean-Marie Denis
(86) Numéro de dépôt international: PCT/EP2004/006332
(87) Numéro de publication internationale: WO 2004/110793

(56) Documents cités:
- EP-A- 0 834 746
- EP-A- 1 031 442
- FR-A- 2 447 539
- GB-A- 2 242 527
- US-A- 4 339 713
- US-A1- 2003 001 563
- US-B1- 6 265 867

## Description

La présente invention concerne un dispositif destiné à être porté par un ensemble pneumatique et roue pour détecter des révolutions de celui-ci. Elle concerne également un pneumatique ou une roue portant un tel dispositif et un procédé de détection des révolutions d'un tel ensemble.

Un véhicule automobile comporte en général un compteur kilométrique permettant de connaître la distance totale parcourue par ce véhicule. Ce compteur ne renseigne cependant pas sur la distance parcourue par chaque pneumatique du véhicule.

Par exemple, lorsqu'on change temporairement de pneumatiques (l'hiver lorsque l'on met des pneumatiques neige par exemple) ou lorsqu'on remplace de vieux pneumatiques usés, la distance affichée par le compteur kilométrique ne permet plus de connaître la distance réellement parcourue par les pneumatiques.

La seule indication concernant la distance parcourue par un pneumatique d'occasion était, jusqu'il y a quelques années, l'usure de sa bande de roulement.

Les manufacturiers de pneumatiques ont donc eu l'idée d'insérer un dispositif solidaire du pneumatique, à l'intérieur de celui-ci, et permettant de connaître la distance parcourue par ce pneumatique. De tels dispositifs existent déjà.

Parmi ces dispositifs, DE10117920 décrit un capteur de champ magnétique placé sur le pneumatique, qui produit un signal fonction de la position angulaire du pneumatique relativement à l'orientation du champ magnétique terrestre. Le document GB2242527 décrit un capteur de champ magnétique placé sur la roue qui interagit avec un aimant non tournant générant le champ magnétique. Enfin le document EP1031442 décrit un capteur de champ magnétique fixe qui interagit avec le champ magnétique produit par des aimants qui eux tournent avec l'ensemble monté.

Ces dispositifs utilisent le champ magnétique généré par un composant spécifique tel qu'un aimant. D'autre part, les dispositifs existants présentent une durée de vie limitée car ils consomment une quantité importante d'énergie et sont peu robustes aux vibrations.

L'invention a notamment pour but de remédier à ces inconvénients en fournissant un dispositif autonome destiné à être porté par un ensemble pneumatique et roue pour détecter ses révolutions, dispositif dont la durée de vie est au moins égale à celle de l'ensemble. Le dispositif selon l'invention est également plus simple, donc plus robuste.

A cet effet, l'invention a pour objet un arrangement composé d'un ensemble pneumatique et roue et d'un dispositif autonome destiné à être porté par ledit ensemble pneumatique et roue pour détecter des révolutions dudit ensemble, comportant au moins un capteur produisant des signaux, destiné à être solidarisé en rotation avec l'ensemble, de manière qu'à des révolutions dudit ensemble correspondent des révolutions dudit capteur, caractérisé en ce que le capteur est un capteur passif dont les signaux produits sont proportionnels aux variations temporelles d'un flux magnétique engendré par la rotation dudit dispositif dans le champ magnétique terrestre. Le dispositif selon l'invention est dit autonome car il se suffit à lui-même : pour qu'il fonctionne correctement, il n'est pas nécessaire de placer un dispositif produisant un champ magnétique sur le véhicule. Le dispositif de l'invention utilise le champ magnétique terrestre comme repère fixe dans lequel le pneumatique tourne. Ce dispositif pourrait donc même mesurer la distance parcourue par un pneumatique et/ou une roue seuls (c'est-à-dire reliés à aucun organe fixe).

Le capteur du dispositif est dit passif, car à la différence des capteurs de champ magnétique utilisés jusque là, il n'a pas besoin d'énergie pour fonctionner. Cela permet au dispositif de l'invention d'avoir une plus grande autonomie que les dispositifs existants.

De façon optionnelle, le capteur passif du dispositif selon l'invention peut être une simple boucle de fil conducteur. Une tension électrique se crée alors dans la boucle par induction lorsqu'elle est soumise à une variation temporelle d'un flux magnétique. Un avantage de cette bobine est sa grande robustesse. Contrairement aux capteurs magnétiques utilisés dans l'état de la technique, qui sont des capteurs complexes et fragiles, une simple bobine de fil conducteur présente une grande résistance aux vibrations créées par le roulement sur la chaussée. Il est avantageux d'utiliser une bobine dont la surface équivalente est maximale et au moins supérieure à 0,15 m². Cela permet d'obtenir une sensibilité suffisante du capteur compte tenu des valeurs usuelles du champ magnétique terrestre. Dans le cas contraire, le risque est de ne pas détecter toutes les rotations effectuées, notamment lorsque le véhicule roule à faible vitesse ou roule sous des latitudes proches de l'équateur. L'arrangement selon l'invention peut en outre comporter l'une ou plusieurs des caractéristiques suivantes :
- Le capteur du dispositif peut être destiné à être placé sur l'ensemble pneumatique et roue de telle façon que sa direction de sensibilité est orthogonale à l'axe de rotation dudit ensemble ;
- Le capteur du dispositif peut être destiné à être placé sur l'ensemble pneumatique et roue de telle façon que sa direction de sensibilité est orientée radialement par rapport audit ensemble ;
- Le capteur peut comporter un noyau ferromagnétique finement divisé, soit en alliage de FeNi présentant une grande perméabilité, soit en ferrite douce ;
- Le capteur du dispositif peut être destiné à être placé à proximité des tringles du pneumatique (à quelques centimètres au plus) et a fortiori près de la jante de la roue ; dans ce cas, pour profiter pleinement de l'aimantation induite par le champ magnétique terrestre, il est particulièrement avantageux que son axe de sensibilité soit orienté radialement (perpendiculaire) relativement à l'axe de rotation dudit ensemble ;
- Le dispositif peut comporter un interpréteur de signaux qui produit une impulsion chaque fois qu'il a détecté au moins un cycle des signaux produits par le capteur passif ;
- L'interpréteur du dispositif peut comporter un comparateur ;
- L'interpréteur du dispositif peut comporter des moyens de filtrage des signaux produits par le capteur ;
- L'interpréteur du dispositif peut comporter des moyens d'amplification de signaux ;
- Le dispositif peut comporter un moyen de comptage relié à l'interpréteur ;
- Le moyen de comptage du dispositif peut comporter un compteur qui, chaque fois qu'il a reçu un nombre prédéterminé d'impulsions de la part de l'interpréteur, transmet une impulsion à un microcontrôleur comportant des moyens de stockage du nombre d'impulsions reçu du compteur ;
- Le dispositif peut comporter un dispositif de transmission vers l'extérieur de données caractéristiques du nombre d'impulsions stocké par le microcontrôleur ;
- Le dispositif peut comporter un système autonome d'alimentation électrique des circuits électroniques par exemple une pile électrochimique ;
- L'interpréteur du dispositif de l'invention peut additionner les signaux de plusieurs capteurs passifs portés par la circonférence de l'ensemble pneumatique et roue, après les avoir éventuellement remis en phase pour tenir compte de leur décalage angulaire sur l'ensemble.

De préférence, la roue de l'ensemble pneumatique et roue équipé d'un dispositif selon l'invention comprend une jante en acier, on a en effet constaté qu'une telle jante en acier améliore sensiblement les performances du dispositif selon l'invention. Les tringles du pneumatique ou une pile du dispositif peuvent aussi être utilisées avantageusement pour augmenter le signal.

L'invention a également pour objet un pneumatique muni d'un dispositif autonome destiné à détecter ses révolutions, ainsi qu'une roue munie d'un dispositif destiné à détecter ses révolutions.

Elle a aussi pour objet un procédé pour détecter les révolutions d'un ensemble pneumatique et roue.

Ce procédé consiste à placer sur l'ensemble au moins deux capteurs produisant des signaux proportionnels aux variations temporelles d'un flux magnétique, à additionner ces signaux et à détecter les périodes du résultat de cette addition.

De manière avantageuse, avant d'additionner les signaux, on les remet en phase en fonction de leurs positions angulaires relatives sur l'ensemble.

L'invention sera mieux comprise à la lecture de la description qui va suivre, donnée uniquement à titre d'exemple, dans le cas d'un dispositif fixé à un pneumatique et faite en se référant aux dessins annexés dans lesquels :
- La figure 1 est une vue du côté gauche d'un véhicule automobile dont le pneumatique avant gauche est muni d'un dispositif selon l'invention ;
- La figure 2 est une vue en perspective d'un pneumatique portant un dispositif selon l'invention ;
- La figure 3 est un schéma fonctionnel d'un dispositif selon l'invention ;
- La figure 4 est un schéma de la circonférence d'un pneumatique portant deux capteurs diamétralement opposés ;
- La figure 5a est un graphique représentant les signaux temporels produits par deux capteurs disposés selon la figure 4 ; et
- La figure 5b est un graphique représentant le signal temporel résultant du déphasage et de l'addition par le dispositif interpréteur des deux signaux de la figure 5a.

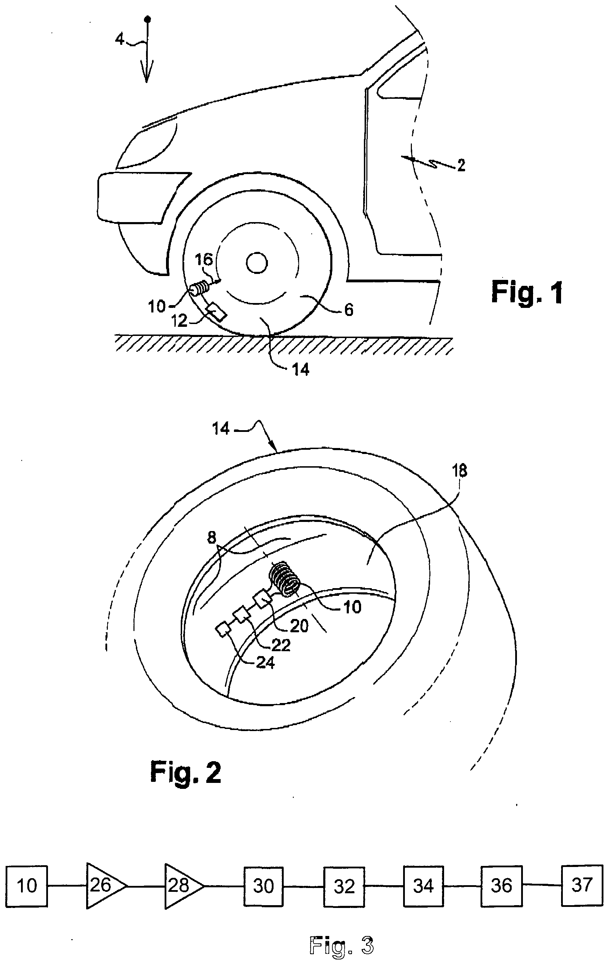

La figure 1 représente l'avant d'un véhicule automobile 2 soumis au champ magnétique terrestre 4 et dont le pneumatique de la roue avant gauche 6 est équipé d'un dispositif 8 selon l'invention.

Le dispositif représenté est composé d'un capteur 10 relié à un dispositif électronique 12, placé dans l'enveloppe d'un pneumatique 14. La direction de sensibilité 16 du capteur 10 est de préférence radiale de telle manière que lorsque le véhicule est en mouvement, la direction de sensibilité du capteur est en rotation par rapport à la direction fixe du champ magnétique terrestre.

La figure 2 représente un pneumatique 14 à l'intérieur duquel est placé un dispositif 8 selon l'invention. Ce dispositif, placé sur un des flancs intérieurs 18 du pneumatique 14, est composé d'un capteur 10, d'un interpréteur 20, d'un moyen de comptage 22 et d'un dispositif de transmission 24.

Dans un mode de réalisation particulier représenté sur la figure 2, le capteur 10 est une bobine de fil conducteur. La direction de sensibilité de la bobine, qui est la même que celle de l'axe de la bobine, est orientée radialement par rapport au pneumatique 14. Cette bobine est passive et produit un signal proportionnel à la variation du flux magnétique qui la traverse selon la loi de Faraday-Lenz.

Le signal généré par la bobine est un signal périodique dont la fréquence est égale à la fréquence de rotation du pneumatique.

Le signal généré par la bobine est d'autant plus ample que les variations du flux magnétique traversant la bobine sont plus fortes et plus rapides : son amplitude dépend donc aussi de la vitesse de rotation de la bobine. Dans un mode de réalisation particulier, on intègre le signal pour retrouver la valeur du champ et s'affranchir de l'effet vitesse. La figure 3 est un schéma fonctionnel d'un mode de réalisation particulier d'un dispositif selon l'invention. Le dispositif 8 est composé d'un capteur 10, d'un amplificateur 26 permettant d'augmenter les signaux produits par le capteur si nécessaire, d'un filtre 28 permettant de supprimer les composantes fréquentielles parasites et de rejeter les sources de champ magnétiques alternatives extérieures parasites (par exemple le 50 Hz du réseau EDF), d'un comparateur 30 qui génère un créneau à chaque tour du pneumatique.

L'amplificateur 26, le filtre 28 et le comparateur 30 constituent un interpréteur de signaux. Le dispositif comprend en outre un compteur à N bits 32 qui stocke le nombre de tours réalisés par le pneumatique et qui, lorsqu'il est rempli (tous les 2^{N} tours) réveille un microcontrôleur 34 qui incrémente sa mémoire de un par exemple. Le compteur 32 et le microcontrôleur 34 constituent un moyen de comptage. Enfin, le dispositif comporte un dispositif d'émission 36 permettant de transmettre vers l'extérieur des données caractéristiques du nombre d'impulsions comptées par le microcontrôleur 34. Une pile 37 alimente en énergie électrique les circuits électroniques du dispositif.

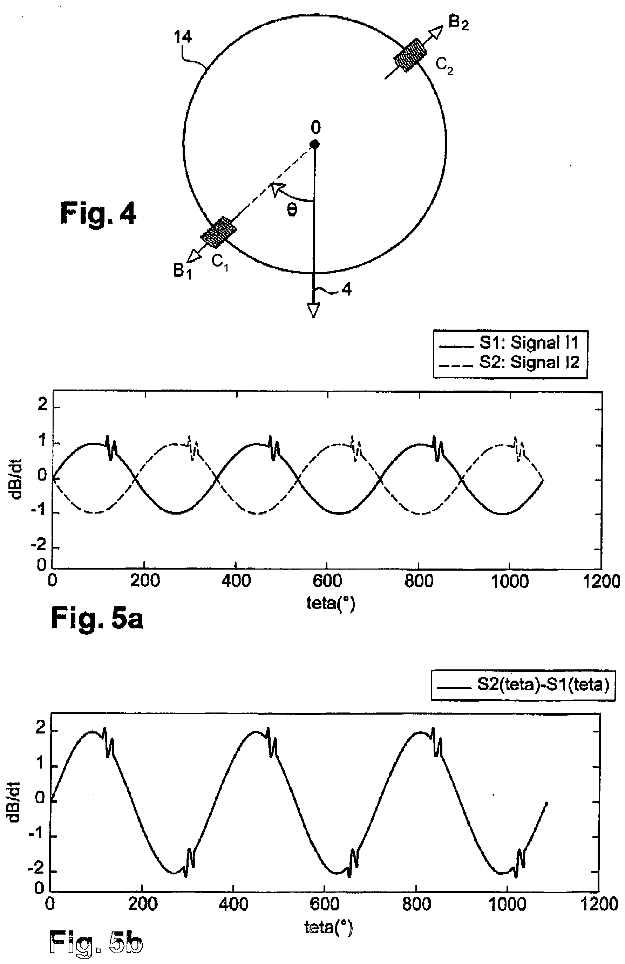

La figure 4 représente un mode de réalisation de l'invention selon lequel deux capteurs C1 et C2 diamétralement opposés sont portés par la circonférence du pneumatique 14. B1 et B2 sont les directions de sensibilité des capteurs. Cette configuration permet d'améliorer le rapport signal sur bruit dans le cas où des sources magnétiques parasites déforment les signaux produits par les capteurs de telle manière que l'amplification et le filtrage ne sont plus suffisants.

La figure 5a représente les deux signaux SI et S2 produits par les deux capteurs du mode de réalisation précédent en présence d'une source magnétique parasite. Chaque fois qu'un capteur passe devant cette source, une perturbation du signal apparaît. Comme les deux capteurs sont diamétralement opposés, les deux signaux produits par le champ magnétique terrestre sont identiques en phase ou en opposition selon que les capteurs sont bobinés dans le même sens ou dans le sens contraire comme c'est le cas sur la figure 5a.

La figure 5b représente le signal obtenu après soustraction des deux signaux. On remarque alors que l'intensité du signal utile a été doublée et que le rapport signal à bruit a été multiplié par deux si l'on moyenne le signal sur plusieurs périodes.

Les modes de réalisation décrits ci-dessus n'ont été fournis qu'à titre d'exemples non limitatifs et pourront recevoir toutes modifications désirables sans sortir pour cela du cadre de l'invention.

## Revendications

1. Arrangement composé d'un ensemble pneumatique et roue et d'un dispositif autonome de détection des révolutions dudit ensemble, comportant au moins un capteur (10, C1, C2) solidarisé en rotation audit ensemble (14) de manière qu'à des révolutions dudit ensemble correspondent des révolutions dudit capteur, **caractérisé en ce que** le capteur (10) est un capteur passif dont les signaux produits sont proportionnels aux variations temporelles d'un flux magnétique engendré par la rotation dudit dispositif dans le champ magnétique terrestre.

2. Arrangement selon la revendication 1, dans lequel le capteur (10) est une boucle de fil conducteur.

3. Arrangement selon la revendication 2, dans lequel le capteur (10) est une bobine de surface équivalente supérieure à 0,15 m².

4. Arrangement selon l'une quelconque des revendications 1 à 3, dans lequel le capteur (10) est placé sur ledit ensemble de telle façon que sa direction de sensibilité est orthogonale à l'axe de rotation dudit ensemble.

5. Arrangement selon la revendication 4, dans lequel le capteur (10) est placé sur ledit ensemble de telle façon que sa direction de sensibilité est orientée radialement par rapport audit ensemble.

6. Arrangement selon la revendication 5, dans lequel le capteur (10) est placé à proximité des tringles du pneumatique.

7. Arrangement selon la revendication 5, dans lequel le capteur (10) est placé au niveau du sommet dudit pneumatique.

8. Arrangement selon l'une quelconque des revendications 1 à 7, comportant un interpréteur (20, 26, 28, 30) qui produit une impulsion chaque fois qu'il a détecté au moins un cycle des signaux produits par le capteur passif (10).

9. Arrangement selon la revendication 8, dans lequel l'interpréteur comporte un comparateur (30).

10. Arrangement selon l'une quelconque des revendications 8 et 9, dans lequel l'interpréteur comporte des moyens de filtrage (28) des signaux produits par le capteur (10).

11. Arrangement selon l'une quelconque des revendications 8 à 10, dans lequel l'interpréteur comporte des moyens d'amplification de signaux (26).

12. Arrangement selon l'une quelconque des revendications 8 à 11, comportant un moyen de comptage (22, 32, 34) relié à l'interpréteur.

13. Arrangement selon la revendication 12, dans lequel le moyen de comptage est composé d'un compteur (32) qui, chaque fois qu'il a reçu un nombre prédéterminé d'impulsions de la part de l'interpréteur, transmet une impulsion à un microcontrôleur (34) comportant des moyens de stockage du nombre d'impulsions reçu du compteur.

14. Arrangement selon la revendication 13, comportant un dispositif (36) de transmission vers l'extérieur de données caractéristiques du nombre d'impulsions stocké par le microcontrôleur (34).

15. Arrangement selon l'une quelconque des revendications 1 à 14, comportant plusieurs capteurs passifs (C1, C2), portés par la circonférence dudit ensemble, et un interpréteur apte à remettre en phase les signaux produits par ces capteurs avant de les additionner.

16. Arrangement selon l'une quelconque des revendications 1 à 15, tel que l'ensemble pneumatique et roue comprend une jante en acier.

17. Roue d'un arrangement selon l'une quelconque des revendications 1 à 16, telle que ledit dispositif est porté par ladite roue.

18. Pneumatique d'un arrangement selon l'une quelconque des revendications 1 à 16, tel que ledit dispositif est porté par ledit pneumatique.

19. Procédé pour détecter les révolutions d'un ensemble pneumatique et roue, employant un arrangement comprenant au moins deux capteurs (C1, C2) selon l'une des revendications 1 à 16 produisant des signaux proportionnels aux variations temporelles d'un flux magnétique, consistant à remettre en phase les signaux, à additionner les signaux et à détecter les périodes du résultat de cette addition.

## Patentansprüche

1. Anordnung, bestehend aus einer Rad-Reifen-Einheit und einer autonomen Vorrichtung zur Erfassung der Umdrehungen dieser Einheit, die wenigstens einen Sensor (10, C1, C2) aufweist, der drehfest mit der Einheit (14) verbunden ist, so dass Umdrehungen der Einheit Umdrehungen des Sensors entsprechen, **dadurch gekennzeichnet, dass** der Sensor (10) ein passiver Sensor ist, dessen erzeugte Signale proportional zu den zeitlichen Änderungen eines Magnetflusses sind, der durch die Rotation der Vorrichtung im Erdmagnetfeld erzeugt wird.

2. Anordnung nach Anspruch 1, wobei der Sensor (10) eine Leiterdrahtschleife ist.

3. Anordnung nach Anspruch 2, wobei der Sensor (10) eine Spule mit einer äquivalenten Oberfläche ist, die größer als 0,15 m² ist.

4. Anordnung nach einem der Ansprüche 1 bis 3, wobei der Sensor (10) derart an der Einheit angeordnet ist, dass seine Empfindlichkeitsrichtung orthogonal zur Drehachse der Einheit ist.

5. Anordnung nach Anspruch 4, wobei der Sensor (10) derart an der Einheit angeordnet ist, dass seine Empfindlichkeitsrichtung radial bezüglich der Einheit ausgerichtet ist.

6. Anordnung nach Anspruch 5, wobei der Sensor (10) in der Nähe der Wulstkerne des Reifens angeordnet ist.

7. Anordnung nach Anspruch 5, wobei der Sensor (10) an der Laufflächenkrone des Reifens angeordnet ist.

8. Anordnung nach einem der Ansprüche 1 bis 7, welche einen Auswerter (20, 26, 28, 30) aufweist, der jedes Mal, wenn er wenigstens einen Zyklus der von dem passiven Sensor (10) erzeugten Signale erfasst hat, einen Impuls erzeugt.

9. Anordnung nach Anspruch 8, wobei der Auswerter einen Komparator (30) aufweist.

10. Anordnung nach einem der Ansprüche 8 und 9, wobei der Auswerter Mittel zur Filterung (28) der von dem Sensor (10) erzeugten Signale aufweist.

11. Anordnung nach einem der Ansprüche 8 bis 10, wobei der Auswerter Mittel zur Verstärkung von Signalen (26) aufweist.

12. Anordnung nach einem der Ansprüche 8 bis 11, welche ein Zählmittel (22, 32, 34) aufweist, das mit dem Auswerter verbunden ist.

13. Anordnung nach Anspruch 12, wobei das Zählmittel aus einem Zähler (32) besteht, welcher jedes Mal, wenn er von dem Auswerter eine vorbestimmte Anzahl von Impulsen empfangen hat, einen Impuls an einen Mikrocontroller (34) sendet, der Mittel zur Speicherung der von dem Zähler empfangenen Anzahl von Impulsen aufweist.

14. Anordnung nach Anspruch 13, welche eine Vorrichtung (36) zur Übertragung von Daten, die für die von dem Mikrocontroller (34) gespeicherte Anzahl von Impulsen charakteristisch sind, nach außen aufweist.

15. Anordnung nach einem der Ansprüche 1 bis 14, welche mehrere passive Sensoren (C1, C2), die vom Umfang der Einheit getragen werden, und einen Auswerter, der geeignet ist, die von diesen Sensoren erzeugten Signale in Phase zu bringen, bevor sie addiert werden, aufweist.

16. Anordnung nach einem der Ansprüche 1 bis 15, wobei die Rad-Reifen-Einheit eine Felge aus Stahl umfasst.

17. Rad einer Anordnung nach einem der Ansprüche 1 bis 16, wobei die Vorrichtung von dem Rad getragen wird.

18. Reifen einer Anordnung nach einem der Ansprüche 1 bis 16, wobei die Vorrichtung von dem Reifen getragen wird.

19. Verfahren zum Erfassen der Umdrehungen einer Rad-Reifen-Einheit, bei dem eine Anordnung zum Einsatz kommt, die wenigstens zwei Sensoren (C1, C2) nach einem der Ansprüche 1 bis 16 umfasst, die Signale erzeugen, die zu den zeitlichen Änderungen eines Magnetflusses proportional sind, darin bestehend, die Signale in Phase zu bringen, die Signale zu addieren und die Perioden des Ergebnisses dieser Addition zu erfassen.

## Claims

1. Arrangement comprising an tire and wheel assembly and an autonomous device in order to detect revolutions of said assembly, the said device comprising at least one sensor (10, C1, C2) producing signals, which is integral in rotation with said assembly (14) such that revolutions of said assembly correspond to revolutions of said sensor, **characterized in that** the sensor (10) is a passive sensor, the produced signals of which are proportional to the temporal variations of a magnetic flux caused by the rotation of said device in the Earth's magnetic field.

2. Arrangement according to claim 1, in which the sensor (10) is a loop of conductive wire.

3. Arrangement according to claim 2, in which the sensor (10) is a winding with an equivalent surface greater than 0.15 m².

4. Arrangement according to any of the claims 1 to 3, in which the sensor (10) is placed on said assembly such that its direction of sensitivity is orthogonal to the axis of rotation of said assembly.

5. Arrangement according to claim 4, in which the sensor (10) is placed on said assembly such that its direction of sensitivity is orientated radially with respect to said assembly.

6. Arrangement according to claim 5, in which the sensor (10) is placed in proximity to the bead wires of the tire.

7. Arrangement according to claim 5, in which the sensor (10) is placed at the level of the crown of said tire.

8. Arrangement according to any of the claims 1 to 7, comprising an interpreter (20, 26, 28, 30) which produces an impulse each time it has detected at least one cycle of signals produced by the passive sensor (10) .

9. Arrangement according to claim 8, in which the interpreter comprises a comparator (30).

10. Arrangement according to any of the claims 8 to 9, in which the interpreter comprises filtration means (28) for the signals produced by the sensor (10).

11. Arrangement according to any of the claims 8 to 10, in which the interpreter comprises amplification means for the signals (26).

12. Arrangement according to any of the claims 8 to 11, comprising a counting means (22, 32, 34) which is connected to the interpreter.

13. Arrangement according to claim 12, in which the counting means comprises a counter (32) which, each time it has received a pre-determined number of impulses on the part of the interpreter, transmits an impulse to a micro-controller (34) comprising storage means for the number of impulses received from the counter.

14. Arrangement according to claim 13 comprising a device for transmission (36), towards the exterior, of data which are characteristic of the number of impulses stored by the micro-controller (34).

15. Arrangement according to any of the claims 1 to 14, comprising a plurality of passive captors (C1, C2), which are carried by the circumference of said assembly, and an interpreter which is capable of putting the signals produced by the sensors back in phase before adding them.

16. Arrangement according to any of the claims 1 to 15, such that the tire and wheel assembly comprises a steel wheel rim.

17. Wheel of an arrangement according to any of the claims 1.to 16 in which the device is carried by the said wheel.

18. Tire of an arrangement according to any of the claims 1 to 16 in which the device is carried by the said tire.

19. Method for detecting the revolutions of a tire and wheel assembly, employing an arrangement according to any of the claims 1 to 16 comprising at least two sensors (C1, C2), which produce signals proportional to the temporal variations of a magnetic flux, putting the signals back in phase, adding the signals and detecting the periods of the result of this addition.
